# NEUE EUROPÄISCHE PATENTSCHRIFT

(11) **EP 2 527 783 B2**
(45) Veröffentlichungstag und Bekanntmachung des Hinweises auf die Entscheidung über den Einspruch: **12.04.2017**
(45) Hinweis auf die Patenterteilung: 13.11.2013
(21) Anmeldenummer: 12156305.0
(22) Anmeldetag: 21.02.2012
(51) Int. Cl.: G01B 5/012, G01B 21/04

(54) **Tastsystem und Verfahren zum Betrieb eines Tastsystems**
Sensor system and method for operating same
Système de palpage et procédé destiné au fonctionnement d'un système de palpage

(30) Priorität: 26.05.2011 DE 102011076504
(43) Veröffentlichungstag der Anmeldung: 28.11.2012
(73) Patentinhaber: Dr. Johannes Heidenhain GmbH, 83301 Traunreut (DE)
(72) Erfinder: Gröll, Klaus, 83329 Waging am See (DE)

(56) Entgegenhaltungen:
- EP-A1- 2 317 278
- EP-A2- 1 926 071
- WO-A1-2004/057552

## Beschreibung

Die Erfindung betrifft ein Tastsystem, bestehend aus einem Tastkopf mit einem Taststift und einem Sende-Empfängerelement, wobei zwischen Tastkopf und dem Sende-Empfängerelement eine Signal- bzw. Informationsübertragung möglich ist gemäß dem Anspruch 1. Ferner betrifft die Erfindung ein Verfahren zum Betrieb eines derartigen Tastsystems gemäß dem Anspruch 6.

Ein Tastsystem umfasst in der Regel einen mobilen Tastkopf und ein stationäres Sende-Empfängerelement. Der Tastkopf in Form eines Tastschalters mit einem auslenkbaren Taststift, der bei einer Auslenkung aus seiner Ruheposition oder bei einer Berührung des Taststifts ein Signal abgibt, wird insbesondere zur Positionsbestimmung von Werkstücken verwendet, die in Material bearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Sensorsignal erzeugt, wenn die Auslenkung eine vorgegebene Tastschwelle überschreitet. Das elektrische Sensorsignal wird dann häufig in ein Funk- und / oder Infrarot-Signal umgewandelt, so dass auf diese Weise eine berührungs- und drahtlose Signalübertragung an das Sende-Empfängerelement des Tastsystems erreicht wird.

In diesem Sende-Empfängerelement werden dann die drahtlos übertragenen Signale wieder in elektrische Signale umgewandelt. Das Sende-Empfängerelement des Tastsystems ist mit einer Folgeelektronik verbunden, zu der die elektrischen Signale weitergeleitet und ausgewertet werden und schließlich beispielsweise zur Steuerung der Werkzeugmaschine bereitgestellt werden. Dort kann dann, basierend auf der gemessenen Position des betreffenden Werkzeugmaschinenteils, die Position des zu vermessenden Werkstücks bestimmt werden.

Mit einem entsprechenden Tastkopf kann also beispielsweise die Kontur eines Werkstücks aber auch die Kontur eines Werkzeugs abgetastet werden. Im Falle der Abtastung eines Werkstücks ist der Tastkopf meist beweglich relativ zum Sende-Empfängerelement angeordnet und im Falle einer Abtastung eines Werkzeugs ist der Tastkopf meist stationär relativ zum Sende-Empfängerelement montiert.

Aus der Patentschrift EP 1 445 747 B1 ist ein Tastsystem der eingangs genannten Art bekannt, bei dem eine drahtlose Signalübertragung mit InfrarotLicht offenbart ist.

In der Offenlegungsschrift EP 2 317 278 A1 ist ein Tastsystem beschrieben, bei dem bestimmte Signale durch Lichtwellen und bestimmte Signale mit Funkwellen übertragen werden.

Aus WO 2004/057552 ist ein Koordinatenmessgerät mit Signalübertragung bekannt.

Der Erfindung liegt die Aufgabe zu Grunde, ein Tastsystem, bzw. ein Verfahren zum Betrieb eines Tastsystems zu schaffen, welches insgesamt für ein Erreichen einer hohen Messgenauigkeit geeignet ist. Insbesondere kann durch die Erfindung ein störungsunanfälliger Betrieb auch bei minimalem Energiebedarf insbesondere des Tastkopfs eines Tastsystems erreicht werden.

Diese Aufgabe wird erfindungsgemäß durch die Merkmale des Anspruchs 1 bzw. des Anspruchs 6 gelöst.

Demnach umfasst, gemäß Anspruch 1, das Tastsystem ein Sende-Empfängerelement und einen Tastkopf, der einen Taststift und ein Sensorelement aufweist. Der Tastkopf und das Sende-Empfängerelement sind derart konfiguriert, dass zwischen diesen eine Signalübertragung wahlweise in zwei Modi herstellbar ist. Dabei ist im ersten Modus vom Sende-Empfängerelement ein Signal sendbar, welches vom Tastkopf empfangbar ist, wobei als Reaktion auf das empfangene Signal des Sende-Empfängerelements vom Tastkopf ein Acknowledge-Signal zur Bestätigung des erfolgreichen Empfangs sendbar ist. Im zweiten Modus ist bei Berührung des Taststifts vom Sensorelement ein Sensorsignal erzeugbar, welches vom Tastkopf sendbar ist und vom Sende-Empfängerelement empfangbar ist, wobei als Reaktion auf das empfangene Sensorsignal vom Sende-Empfängerelement ein Acknowledge-Signal sendbar ist.

Das vom Sensorelement erzeugbare Sensorsignal beinhaltet eine Antastinformation, so dass also das Sensorsignal als Träger der Antastinformation dient. Die Antastinformation gibt Auskunft darüber, ob der Taststift einen zu messenden Körper berührt. Sämtliche Signale, insbesondere auch das Sensorsignal, können als Funksignale ausgestaltet sein. Zur Erreichung einer hohen Messgenauigkeit ist es vorteilhaft, wenn das Sensorsignal möglichst rasch an das Sende-Empfängerelement übertragen wird. Aus diesem Grund soll eine weitgehend störungsfreie Signalübertragung hergestellt werden, weil Störungen zum wiederholten Senden des Sensorsignals führen und daher die Signalübertragung insgesamt verlangsamen.

Im ersten Modus ist das Tastsystem so konfiguriert, dass der Tastkopf nur als Reaktion auf ein vom Sende-Empfängerelement gesendetes Signal ein Signal senden kann, das beim Sende-Empfängerelement eine Reaktion auslösen würde. Im zweiten Modus ist das Tastsystem so konfiguriert, dass das Sende-Empfängerelement nur als Reaktion auf ein vom Tastkopf gesendetes Signal ein Signal senden kann, das beim Tastkopf eine Reaktion auslösen würde. Im zweiten Modus wird die Signalübertragung innerhalb des Tastsystems vom Tastkopf aus synchronisiert, so dass die Zeiten, in den der Tastkopf empfangsbereit ist, von Ereignissen, die der Tastkopf selbst vornimmt abhängen. Diese Ereignisse können insbesondere das Senden von Signalen durch den Tastkopf darstellen.

In einer bevorzugten Ausgestaltung der Erfindung kann das Sensorelement als ein mechanisch wirkendes Element, etwa als ein Dehnmessstreifen oder als ein Piezoelement ausgestaltet sein oder als ein optisch wirkendes Element, beispielsweise als ein Fotoelement, in einer optischen Anordnung realisiert sein.

Mit Vorteil ist im zweiten Modus nach dem Empfang des vom Tastkopf kommenden Sensorsignals ein weiteres Signal vom Sende-Empfängerelement sendbar, durch welches ein Beenden des zweiten Modus bzw. ein Umschalten vom zweiten Modus in den ersten Modus auslösbar ist. Das Senden des weiteren Signals steht also im Zusammenhang mit dem Senden des Acknowledge-Signals und ist somit im kausalen Zusammenhang mit dem vorhergehenden Senden eines Signals durch den Tastkopf. Im zweiten Modus kann das Sende-Empfängerelement grundsätzlich von sich aus ohne einen vorhergehenden Empfang eines Signals durch den Tastkopf kein Signal senden bzw. absetzten

Das Tastsystem kann so konfiguriert sein, dass eine Signalübertragung, insbesondere drahtlos, auf nur einem Kanal, insbesondere einem Funkkanal, durchführbar ist.

Erfindungsgemäß ist im ersten Modus
a) der Tastkopf während einer Zeitdauer empfangsbereit und
b) das Signal vom Sende-Empfängerelement während weiteren Zeltdauer sendbar, wobei
die Zeitdauer für die Empfangsbereitschaft länger ist als die Zeitdauer, in welcher das Signal sendbar ist.

Gemäß einer vorteilhaften Ausgestaltung der Erfindung kann die Empfangsbereitschaft des Tastkopfs in beiden Modi während eines Zeitraums temporär deaktiviert sein. Dieser Zeitraum erstreckt sich zumindest teilweise in die Zeit zwischen dem Senden zweier benachbarter Signale durch den Tastkopf. Innerhalb des Zeitraums, in dem die Empfangsbereitschaft des Tastkopfs deaktiviert ist, sind durch den Tastkopf keine Signale des Sende-Empfängerelements empfangbar.

Weiterhin kann das Tastsystem vorteilhafterweise beim Wechsel vom ersten Modus in den zweiten Modus in einem dritten Modus, einem Übergangsmodus betreibbar sein. Im dritten Modus sind der Tastkopf und das Sende-Empfängerelement empfangsbereit aber es sind weder vom Tastkopf noch vom Sende-Empfängerelement Signale sendbar. Alternativ oder ergänzend kann das Tastsystem auch beim Wechsel vom zweiten Modus in den ersten Modus im dritten Modus betreibbar sein.

Weiterhin umfasst die Erfindung gemäß Anspruch 7, auch ein Verfahren zum Betrieb eines Tastsystems mit oben beschriebenen Komponenten, wobei der Tastkopf und das Sende-Empfängerelement derart konfiguriert sind, dass zwischen diesen eine Signalübertragung wahlweise in zwei Modi herstellbar ist, so dass im ersten Modus das Sende-Empfängerelement ein Signal sendet, welches vom Tastkopf empfangen wird, und der Tastkopf als Reaktion auf das empfangene Signal ein Acknowledge-Signal sendet, im zweiten Modus das Sensorelement bei Berührung des Taststifts ein Sensorsignal erzeugt, welches der Tastkopf sendet und vom Sende-Empfängerelement empfangen wird, wobei das Sende-Empfängerelement als Reaktion auf das empfangene Sensorsignal ein Acknowledge-Signal sendet.

Mit Vorteil sendet der Tastkopf im zweiten Modus in definierten Zeitabständen Δtb Signale, welche eine weitere Information beinhalten, wobei der Tastkopf, nachdem eines dieser Signale gesendet wurde, temporär während einer Zeitdauer Δtr empfangsbereit ist und die Empfangsbereitschaft noch vor dem Senden des nächsten dieser Signale deaktiviert wird. Vorzugsweise ist diejenige Zeitdauer Δtr, in der der Tastkopf empfangsbereit ist, kürzer als die Zeitdauer Δti der Empfangsbereitschaft des Tastkopfs. Als weitere Information kann eine Information gesehen werden, die sich von dieser Antastinformation unterscheidet und insbesondere als Bereitschaftsinformation die Betriebsbereitschaft des Tastkopfs signalisiert. Mit Vorteil ist das Verhältnis Δ tr/ Δtb der Zeitdauern kleiner ²/₃, insbesondere kleiner ½, insbesondere kleiner ¼.

Nach dem erfindungsgemäßen Verfahren wird vom Sende-Empfängerelement das Signal während einer Zeitdauer gesendet und der Tastkopf ist während einer weiteren Zeitdauer empfangsbereit, wobei die weitere Zeitdauer, in welcher die Empfangsbereitschaft aktiviert ist, länger ist als die Zeitdauer, in welcher das Signal gesendet wird. Insbesondere kann die weitere Zeitdauer, in welcher die Empfangsbereitschaft des Tastkopfs aktiviert ist, mindestens zwei Mal länger sein als die Zeitdauer, in welcher das Signal gesendet wird.

Weiterhin kann das Tastsystem beim Wechsel vom ersten Modus in den zweiten Modus in einem dritten Modus betrieben werden, wobei im dritten Modus das Sensorelement eingeschaltet wird und
a) der Tastkopf und das Sende-Empfängerelement empfangsbereit sind, aber
b) weder vom Tastkopf noch vom Sende-Empfängerelement Signale gesendet werden.

Durch die Erfindung kann insbesondere ein Tastkopf stromsparend betrieben werden, ohne dass Verzögerungen infolge von Störungen bei der Signalübertragung zu erwarten wären. Dessen ungeachtet belegt der Tastkopf im ersten Modus keinen Funkkanal, so dass problemlos für mehrere Tastköpfe ein gemeinsamer Kanal nutzbar ist.

Vorteilhafte Ausbildungen der Erfindung entnimmt man den abhängigen Ansprüchen.

Weitere Einzelheiten und Vorteile des erfindungsgemäßen Tastsystems sowie des Verfahrens ergeben sich aus der nachfolgenden Beschreibung zweier Ausführungsbeispiele anhand der beiliegenden Figuren.

Es zeigen die
- Figur 1: ein Tastsystem in einer Seitenansicht,
- Figur 2: eine Detailansicht eines Tastkopfs mit einem Sensorelement,
- Figur 3: ein Zeitdiagramm für die Signalübertragung und die Empfangsbereitschaften,
- Figur 4: ein Prinzipschaltbild der Sende- und Empfängereinheit des Tastkopfs und des Sende-Empfängerelements,
- Figur 5: das Tastsystem, in einer Lage, in der der Tastkopf, bzw. dessen Taststift, ein Werkstück berührt.

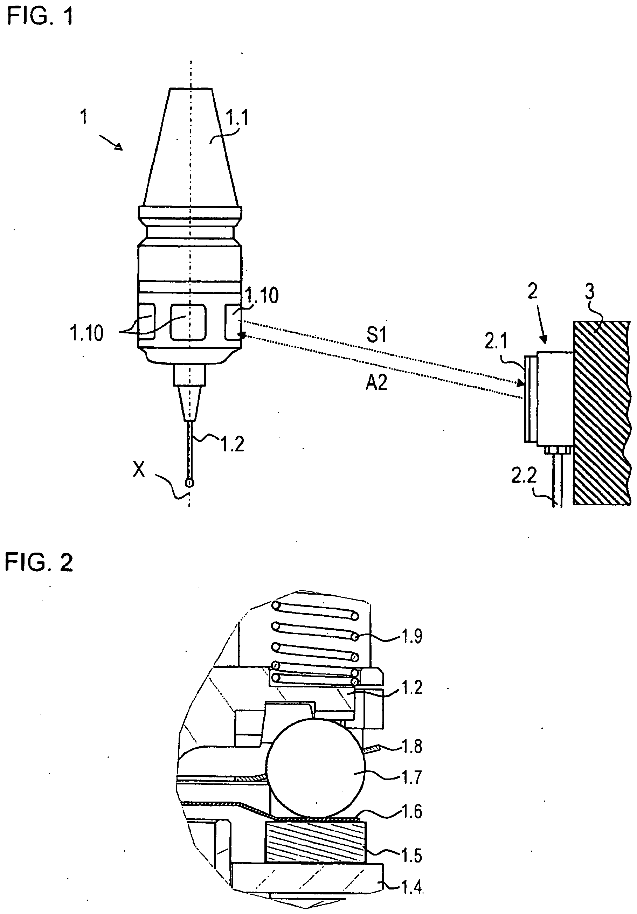

In der Figur 1 ist ein Tastsystem gezeigt, welches einen Tastkopf 1 und ein Sende-Empfängerelement 2 umfasst. Der Tastkopf 1 kann mittels eines Spannkonus 1.1 in eine Spindel einer Werkzeugmaschine eingespannt werden. Die Längsachse X des Tastkopfs 1 stellt gleichzeitig die Mittelachse des Spannkonus 1.1 dar. Parallel und konzentrisch zur Längsachse X ist am Tastkopf 1 ein zylindrischer Taststift 1.2 vorgesehen, welcher an einem Ende eine Antastkugel aufweist.

In der Figur 2 ist eine Teilansicht auf das Innere des Tastkopfs 1 gezeigt. Auf einer Leiterplatte 1.4 sind insgesamt drei druckempfindliche Sensorelemente 1.5 platziert, von denen in der Ansicht der Figur 2 nur eines zu sehen ist. Auf der Oberfläche jedes Sensorelements 1.5 ist jeweils eine Membran 1.6 angeordnet, die von jeweils einer Kugel 1.7 berührt wird, wobei die Kugeln 1.7 durch einen Halter 1.8 exakt an einer vorbestimmten Position relativ zu den Sensorelementen 1.5 fixiert werden. Auf jeder Kugel 1.7 ruht ein Arm des Taststifts 1.2, vorgespannt durch jeweils eine Feder 1.9. Zur Energieversorgung des Tastkopfs 1 ist eine, in den Figuren nicht dargestellte, Batterie im Tastkopf 1 angeordnet.

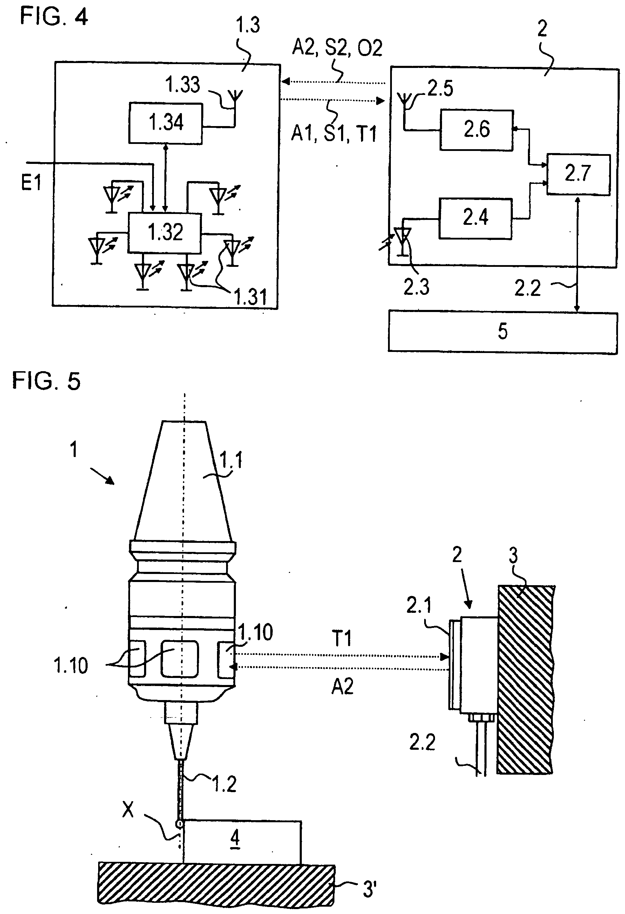

Ferner weist der Tastkopf 1 Fenster 1.10 auf, welche sowohl für Lichtwelle als auch für Funkwellen durchlässig ausgestaltet sind. Innerhalb des Tastkopfs 1 befindet sich gemäß der Figur 4 eine Sende- und Empfängereinheit 1.3. Diese weist Lichtquellen 1.31 auf, die von der Batterie im Tastkopf 1 gespeist werden und über dem Umfang des Tastkopfs 1 versetzt angeordnet sind. Im gezeigten Beispiel sind am Tastkopf 1 sechs Lichtquellen 1.31 vorgesehen, die jeweils um 60° versetzt entlang einer Umfangslinie am Tastkopf 1 angeordnet sind. Wie in der Figur 4 schematisch dargestellt, werden die Lichtquellen 1.31 von einer im Tastkopf 1 befindlichen CPU 1.32 angesteuert. Im Übrigen ist der Tastkopf 1 bezüglich Lichtwellen sensorlos ausgestaltet, so dass vom Tastkopf 1 keine Signale, die auf Lichtwellen beruhen, empfangbar sind.

Weiterhin ist im Tastkopf 1 ein Funktransceiver 1.34 mit einer Antenne 1.33 angeordnet. Die Antenne 1.33 ist beispielsweise hinter den Fenstern 1.10 als umlaufender Draht im Tastkopf 1 untergebracht.

Das Sende-Empfängerelement 2 ist im vorgestellten Beispiel an einem stationären Bauteil 3 der Werkzeugmaschine befestigt und weist ein für Lichtwellen als auch für Funkwellen durchlässiges Fenster 2.1 auf, hinter dem ein optoelektronischer Empfänger 2.3 und ein weiterer Funktransceiver 2.6 mit einer Antenne 2.5 angeordnet sind (siehe Figur 4). Ferner umfasst das Sende-Empfängerelement 2 einen Analog-Digital-Wandler 2.4 und eine integrierte Schaltung 2.7, z. B. in Form eines FPGA-Elements. Alternativ kann im Sende-Empfängerelement 2 auch eine Triggerschaltung ggf. mit einem regelbaren Verstärker zum Einsatz kommen.

Durch ein mehradriges Kabel 2.2 ist das Sende-Empfängerelement 2 zu dessen Energieversorgung am Stromnetz angeschlossenen. Überdies ist das Sende-Empfängerelement 2 über das Kabel 2.2 mit einer Folgeelektronik 5, die z. B. eine Numerischen Steuerung sein kann, mit der betreffenden Werkzeugmaschine elektrisch verbunden. Im Ausführungsbeispiel ist im Übrigen eine bidirektionale Datenbusverbindung zwischen dem Sende-Empfängerelement 2 und der Folgeelektronik 5 eingerichtet.

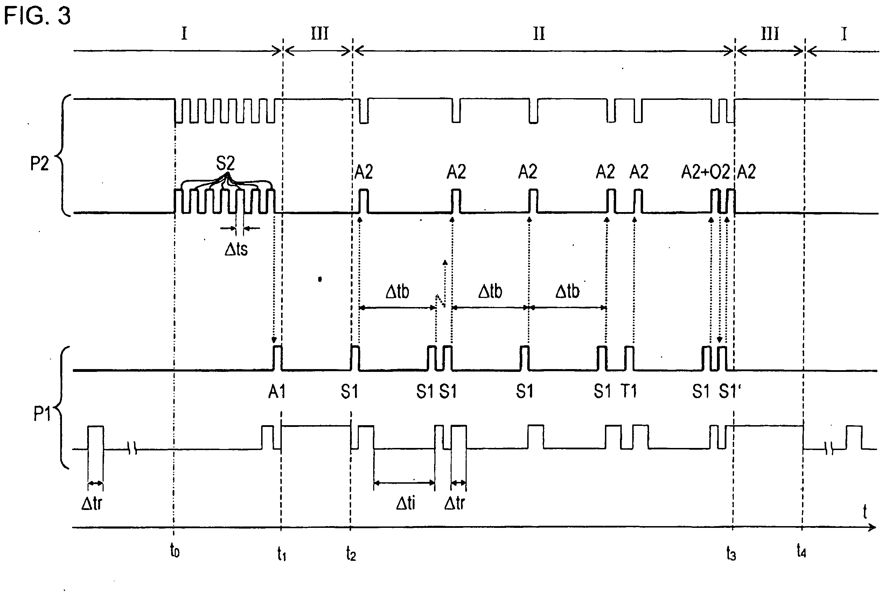

Das Tastsystem kann in verschiedenen Modi I, II, III (siehe Figur 3) betrieben werden, wobei im Folgenden diese Modi I, II, III nur die Signalübertragung über Funkwellen betreffen. Im vorgestellten Ausführungsbeispiel können die Funktransceiver 1.34, 2.6 Funkwellen senden oder empfangen. Die Funktransceiver 1.34, 2.6 sind nicht dazu eingerichtet, dass diese jeweils gleichzeitig senden und empfangen könnten. Für die Signalübertragung über Funkwellen wird nur ein Kanal verwendet. In der Figur 3 sind verschiedene Ereignisse oder Zustände über der Zeitachse t aufgetragen, wobei das Diagramm gemäß der Figur 3 nicht maßstäblich ist. In diesem Diagramm bezieht sich der untere Bereich, welcher in Verbindung mit der geschweiften Klammer mit der Bezeichnung P1 gekennzeichnet ist, auf den Tastkopf 1. Entsprechend steht der in der Figur 3 obere Bereich auf Höhe des Bezugszeichens P2 und der zweiten geschweiften Klammer im Zusammenhang mitdem Sende-Empfängerelement 2. Die unterste Linie stellt die Bereitschaft des Tastkopfs 1 bzw. des Funktransceivers 1.34 zum Signalempfang dar, während die oberste Linie die Empfangsbereitschaft des Funktransceivers 2.6 des Sende-Empfängerelements 2 zeigt. Während der Zeiten, in denen eine Empfangsbereitschaft vorliegt, ist die Linie auf "high" ansonsten ist sie auf "low". Die beiden mittleren mit größerer Strichstärke gedruckten Linien sollen das Senden von Signalen A1, S1, S1', T1, A2, S2, 02 bzw. Senderahmen in Abhängigkeit von der Zeit t zeigen.

Vor dem eigentlichen Messbetrieb wird das Tastsystem in einem ersten Modus I betrieben, in welchem sich der Tastkopf 1 in einem Standby-Zustand befindet. In diesem Zustand ist der batteriebetriebene Tastkopf 1 bzw. der Funktransceiver 1.34 über vergleichsweise lange Zeiten nicht empfangsbereit und schaltet sich wiederkehrend um Strom zu sparen nur kurzeitig während einer Zeitdauer Δtr empfangsbereit. Im vorliegenden Ausführungsbeispiel weist die Zeitdauer Δtr, in welcher der Funktransceiver 1.34 empfangsbereit ist, nur eine Länge von 2 ms auf und ist für die darauffolgenden 1000 ms für den Empfang deaktiviert. Im ersten Modus I kann der Tastkopf 1 erfindungsgemäß unaufgefordert keine Signale absetzten bzw. senden, sondern nur als Reaktion auf ein empfangenes Signal S2 vom Sende-Empfängerelement 2. Um den Tastkopf 1, der beispielsweise in einer Spindel einer Werkzeugmaschine befestigt sein kann, in einen Messbetriebmodus bzw. in den zweiten Modus II überzuführen, wird ein entsprechender Einschaltbefehl von der Folgeelektronik 5 zum Sende-Empfängerelement 2 übertragen. Dieser Einschaltbefehl löst zum Zeitpunkt t₀ (Figur 3) im Sende-Empfängerelement 2 ein wiederholtes Absetzten bzw. Senden eines Signals S2 durch den Funktransceiver 2.6 aus, wobei zwischen dem Absetzten der Signale S2 jeweils eine Pause vorgesehen ist. Das Senden und die Pause haben eine Zeitdauer Δts von jeweils 1 ms. Dieses Signal S2 beinhaltet einen Einschaltbefehl, welcher gemäß der Figur 3 zunächst ins Leere geht, da der Tastkopf 1 im Modus I unmittelbar nach dem Zeitpunkt t₀ zufällig nicht empfangsbereit ist. Wenn aber der Tastkopf 1 entsprechend seiner periodischen Empfangsaktivierung (hier alle 1000 ms) empfangsbereit geschaltet ist, wird das Signal S2 nach mehreren Wiederholungen an den Tastkopf 1 übertragen. Im ersten Modus I ist der Tastkopf 1 während einer Zeitdauer Δtr = 2 ms empfangsbereit, wobei die Zeitdauer Δts in der das Signal S2 vom Sende-Empfängerelement 2 gesendet wird nur 1 ms beträgt. Das Empfangen des Signals S2 vom Sende-Empfängerelement 2 löst im Tastkopf 1 das Senden eines Acknowledge-Signals A1 aus, welches den einwandfreien Empfang des letzten Signals S2 durch den Tastkopf 1 bestätigt. Das Sende-Empfängerelement 2 empfängt das Acknowledge-Signal A1, was zur Folge hat, dass das Senden des Signals S2, das den Einschaltbefehl beinhaltet, beendet wird. Gleichzeitig bleibt auch der Tastkopf 1 stumm.

Für einen definierten Zeitraum sind nach dem Zeitpunkt t₁, hier 19 ms, in einem nun folgenden dritten Modus III sowohl der Tastkopf 1 als auch das Sende-Empfängerelement 2 stumm, wobei während dieser Zeit sowohl der Tastkopf 1 als auch das Sende-Empfängerelement 2 empfangsbereit sind. Im dritten Modus III, im Zeitraum zwischen t₁ und t₂, wird der Tastkopf 1 auf den zweiten Modus II vorbereitet, insbesondere werden mit Hilfe der CPU 1.32 in diesem Zusammenhang die Sensorelemente 1.5 eingeschaltet und die Betriebsspannung im Tastkopf 1 wird aufgebaut. Dass der Tastkopf 1 im dritten Modus III empfangsbereit bleibt, obwohl dies vergleichsweise viel Stromverbrauch mit sich bringt, stellt eine Maßnahme zur Reduzierung der Störempfindlichkeit dar. Denn wenn das vom Tastkopf 1 gesendete Acknowledge-Signal A1 nicht erfolgreich an das Sende-Empfängerelement 2 übertragen würde, würde das Sende-Empfängerelement 2 weiterhin Signale S2 senden. Diese würden aber vom Tastkopf 1 empfangen und ein Senden des Acknowledge-Signals A1 durch den Tastkopf 1 auslösen, so dass dann wieder ein geordnetes Beenden des ersten Modus I ermöglicht wäre.

Sofern während des dritten Modus III weder vom Tastkopf 1 noch vom Sende-Empfängerelement 2 Signale empfangen worden sind, wechselt das Tastsystem zum Zeitpunkt t₂ in den zweiten Modus II, indem der Tastkopf 1 ein Signal S1, das eine Bereitschaftsinformation beinhaltet, sendet. Der Tastkopf 1 ist so eingerichtet, dass dieser in definierten Zeitabständen Δtb (hier Δtb = 20 ms) Signale S1, welche die Bereitschaftsinformation beinhalten, sendet, sofern keine dagegen sprechenden Ereignisse eintreten. Das zum Zeitpunkt t₂ abgesetzte Signal S1 wird unmittelbar durch das Sende-Empfängerelement 2 empfangen, was als Reaktion das Senden eines Acknowledge-Signals A2 durch Sende-Empfängerelement 2 zur Folge hat. Grundsätzlich schaltet der Tastkopf 1, nachdem dieser ein Signal S1 gesendet hat, für eine begrenzte Zeitdauer Δtr, hier 2 ms, seinen Funktransceiver 1.4 empfangsbereit. Entsprechend empfängt der Tastkopf 1 nun das Acknowledge-Signal A2 vom Sende-Empfängerelement 2. Wenn die Zeitdauer Δtr verstrichen ist, wird die Empfangsbereitschaft des Tastkopfs 1 vorübergehend während eines Zeitraums Δti deaktiviert um den Energiebedarf des Tatkopfes 1 zu reduzieren. Der Zeitraum Δti erstreckt sich zum Großteil in die Zeit zwischen dem Senden zweier benachbarter Signale S1 durch den Tastkopf 1. Im gezeigten Ausführungsbeispiel beträgt das Verhältnis Δtr/Δti = ²/₁₈. Bezüglich der Ausgestaltung der Erfindung ist es grundsätzlich vorteilhaft, wenn insbesondere auch im zweiten Modus II das Verhältnis Δtr/Δti kleiner als ½, insbesondere kleiner als ¼ oder kleiner als ¹/₅ ist.

Im zweiten Modus II kann das Sende-Empfängerelement 2 im Übrigen unaufgefordert keine Signale absetzten bzw. senden, sondern nur als Reaktion auf ein empfangendes Signal S1, T1.

Zum Zeitpunkt t₂ + Δtb sendet der Tastkopf 1 gemäß der Figur 3 ein weiteres Signal S1, welches ebenfalls die Bereitschaftsinformation beinhaltet. Im gezeigten Ausführungsbeispiel schlägt die Übertragung des Signals S1 fehl, was durch einen blitzähnlichen Pfeil in der Figur 3 symbolisiert ist. Folglich kann das Sende-Empfängerelement 2 auch keine Empfangsbestätigung senden. Ausgelöst durch das Ausbleiben einer Reaktion der Sende-Empfängerelement 2 auf das vom Tastkopf 1 gesendete Signal S1, sendet der Tastkopf 1 nach 2 ms erneut das Signal S1, das nun vom Sende-Empfängerelement 2 empfangen wird und ein Senden des Acknowledge-Signals A2 durch das Sende-Empfängerelement 2 auslöst. Danach wird entsprechend den Zeitabständen Δtb nach 20 ms, ausgehend von dem zuletzt erfolgreich übertragenen Signal S1, das die Bereitschaftsinformation beinhaltet, erneut ein Signal S1 mit der Bereitschaftsinformation gesendet und daraufhin vom Sende-Empfängerelement 2 durch das Acknowledge-Signal A2 quittiert.

In der Figur 5 ist eine Situation dargestellt, in welcher der Taststift 1.2 ein Werkstück 4, welches an einem Aufspanntisch 3' der Werkzeugmaschine befestigt ist, antastet. In dieser Situation wird von den Sensorelementen 1.5 ein elektrischer Sensorimpuls E1 erzeugt, der entsprechend eine Antastinformation beinhaltet. Das Auftreten des Sensorimpulses E1 veranlasst den Tastkopf 1 ohne Zeitverlust zum Senden eines Sensorsignals T1, das die Antastinformation beinhaltet. Das Sensorsignal T1 wird vom Sende-Empfängerelement 2 empfangen und es wird der Empfang durch Senden des Acknowledge-Signals A2 vom Sende-Empfängerelement 2 bestätigt. Gleichzeitig wird die Antastinformation an die Folgeelektronik 5 übertragen und die Position bestimmt, an welcher die Berührung des Werkstücks erfolgte und die Folgeelektronik 5 löst parallel einen Stopp der Werkzeugmaschine aus, so dass der Tastkopf 1 relativ zum Werkstück 4 nicht mehr bewegt wird. Üblicherweise verfügen Werkzeugmaschinen über genaue Messeinrichtungen, welche die Spindelposition bestimmen, so dass diese Messwerte für die Bestimmung der Berührposition verwendet werden. Gerade in dieser Situation ist es wichtig, dass die Signalübertragung möglichst unverzüglich abgeschlossen wurde. Durch die hohe Störungsunempfindlichkeit des Tastsystems kann diese Randbedingung auch bei der vergleichsweise störempfindlichen Signalübertragung über Funkwellen erfüllt werden.

Gemäß den Zeitabständen Δtb wird 20 ms nach dem Senden des Sensorsignals T1 wieder ein Signal S1 gesendet, das die Bereitschaftsinformation beinhaltet. Allerdings wurde gemäß dem Ausführungsbeispiel in der Zwischenzeit von der Folgeelektronik 5 aus der Befehl zum Beenden des zweiten Modus II an das Sende-Empfängerelement 2 übertragen. Im zweiten Modus II kann im Gegensatz zum ersten Modus I das Sende-Empfängerelement 2 nur als Reaktion auf ein vom Tastkopf 1 gesendetes Signal S1 ein Out-Signal 02 senden. Daher hängt das Sende-Empfängerelement 2 das Out-Signal 02 an das nächste Acknowledge-Signal A2 an und sendet dieses mit entsprechender Verzögerung an den Tastkopf 1. Der Tastkopf 1, dessen Empfang noch aktiviert ist, empfängt das Acknowledge-Signal A2 und das Out-Signal 02 und quittiert diesen Empfang durch Senden eines weiteren Signals S1'. Dieses Signal S1' wird vom Sende-Empfängerelement 2 empfangen und der Empfang durch ein Acknowledge-Signal A2 bestätigt. In dieser Phase liegt sowohl im Tastkopf 1 als auch im Sende-Empfängerelement 2 die Information vor, dass die Übertragung des Out-Signals 02 problemlos abgeschlossen wurde.

Daraufhin geht das Tastsystem in den dritten Modus III über, in welchem keine Signale gesendet werden, aber der Tastkopf 1 und das Sende-Empfängerelement 2 empfangen können. Sofern innerhalb einer definierten Zeitspanne keine Signale gesendet werden, geht das Tastsystem selbstständig in den ersten Modus I über.

Wenngleich bei dem Tastsystem im vorgestellten Ausführungsbeispiel Informationen über Lichtwellen und Funkwellen übertragbar sind, betrifft die Erfindung auch insbesondere Tastsysteme, die nur Funkwellen nutzen.

## Patentansprüche

1. Tastsystem, umfassend
- einen Tastkopf (1), der einen Taststift (1.2) und ein Sensorelement (1.5) aufweist, sowie
- ein Sende-Empfängerelement (2), wobei
der Tastkopf (1) und das Sende-Empfängerelement (2) derart konfiguriert sind, dass zwischen diesen eine Signalübertragung wahlweise in zwei Modi (I, II) derart herstellbar ist, dass im ersten Modus (I) vom Sende-Empfängerelement (2) ein Signal (S2) sendbar ist, welches vom Tastkopf (1) empfangbar ist, wobei als Reaktion auf das empfangene Signal (S2) vom Tastkopf (1) ein Acknowledge-Signal (A1) sendbar ist, wobei
im ersten Modus (I) vom Tastkopf (1) keine Signale unaufgefordert sendbar sind, sondern nur als Reaktion auf ein empfangenes Signal (S2) vom Sende-Empfängerelement (2), wobei
vor dem eigentlichen Messbetrieb das Tastsystem im ersten Modus (I) betreibbar ist, in welchem sich der Tastkopf (1) in einem Standby-Zustand befindet, wobei der batteriebetriebene Tastkopf (1) in diesem Zustand über vergleichsweise lange Zeiten nicht empfangsbereit ist und um Strom zu sparen sich wiederkehrend nur kurzeitig während einer Zeitdauer (Δtr) empfangsbereit schalten kann, so dass
im ersten Modus (I) der Tastkopf (1) während der Zeitdauer (Δtr) empfangsbereit ist und vom Sende-Empfängerelement (2) das Signal (S2) während einer weiteren Zeitdauer (Δts) sendbar ist, wobei die Zeitdauer (Δtr) für die Empfangsbereitschaft länger ist als die weitere Zeitdauer (Δts), in welcher das Signal (S2) sendbar ist,
im zweiten Modus (II) bei Berührung des Taststifts (1.2) vom Sensorelement (1.5) ein Sensorsignal (T₁) erzeugbar ist, welches vom Tastkopf (1) sendbar ist und vom Sende-Empfängerelement (2) empfangbar ist, wobei als Reaktion auf das empfangene Sensorsignal (T1) vom Sende-Empfängerelement (2) ein Acknowledge-Signal (A2) sendbar ist.

2. Tastsystem gemäß dem Anspruch 1, wobei im zweiten Modus (II) nach dem Empfang des Sensorsignals (T1) oder eines anderen Signals (S1) des Tastkopfs (1) durch das Sende-Empfängerelement (2) ein weiteres Signal (02) vom Sende-Empfängerelement (2) sendbar ist, durch welches ein Beenden des zweiten Modus (II) auslösbar ist.

3. Tastsystem gemäß dem Anspruch 1 oder 2, wobei die Signalübertragung auf nur einem Kanal durchführbar ist.

4. Tastsystem gemäß einem der vorhergehenden Ansprüche, wobei die Empfangsbereitschaft des Tastkopfs (1) in beiden Modi (I, II) während eines Zeitraums (Δti) temporär deaktiviert ist, welcher sich zumindest teilweise in die Zeit (Δtb) zwischen dem Senden zweier Signale (A1, S1, S1', T1) durch den Tastkopf (1) erstreckt.

5. Tastsystem gemäß einem der vorhergehenden Ansprüche, wobei beim Wechsel vom ersten Modus (I) in den zweiten Modus (II) und / oder beim Wechsel vom zweiten Modus (II) in den ersten Modus (I) das Tastsystem in einem dritten Modus (III) betreibbar ist, wobei im dritten Modus (III)
der Tastkopf (1) und das Sende-Empfängerelement (2) empfangsbereit sind, aber
weder vom Tastkopf (1) noch vom Sende-Empfängerelement (2) Signale (A1, S1, S1', T1; A2, S2, O2) sendbar sind.

6. Verfahren zum Betrieb eines Tastsystems, welches einen Tastkopf (1), der einen Taststift (1.2) und ein Sensorelement (1.5) aufweist, sowie ein Sende-Empfängerelement (2) umfasst, wobei der Tastkopf (1) und das Sende-Empfängerelement (2) derart konfiguriert sind, dass zwischen diesen eine Signalübertragung wahlweise in zwei Modi (I, II) derart herstellbar ist, dass
im ersten Modus (I) das Sende-Empfängerelement (2) ein Signal (S2) sendet, welches vom Tastkopf (1) empfangen wird, und der Tastkopf (1) als Reaktion auf das empfangene Signal (S2) ein Acknowledge-Signal (A1) sendet, wobei im ersten Modus (I) der Tastkopf (1) unaufgefordert keine Signale senden kann, sondern nur als Reaktion auf ein empfangenes Signal (S2) vom Sende-Empfängerelement (2), wobei
vor dem eigentlichen Messbetrieb das Tastsystem in einem ersten Modus (I) betrieben wird, in welchem sich der Tastkopf (1) in einem Standby-Zustand befindet, wobei der batteriebetriebene Tastkopf (1) über vergleichsweise lange Zeiten nicht empfangsbereit ist und um Strom zu sparen sich wiederkehrend nur kurzeitig während einer Zeitdauer Δtr empfangsbereit schaltet, wobei
im ersten Modus (I) der Tastkopf (1) während einer Zeitdauer (Δtr) empfangsbereit ist und vom Sende-Empfängerelement (2) das Signal (S2) während einer weiteren Zeitdauer (Δts) gesendet wird, wobei die Zeitdauer (Δtr) für die Empfangsbereitschaft länger ist als die weitere Zeitdauer (Δts), in welcher das Signal (S2) gesendet wird, im zweiten Modus (II) das Sensorelement (1.5) bei Berührung des Taststifts (1.2) ein Sensorsignal (T1) erzeugt, welches der Tastkopf (1) sendet und vom Sende-Empfängerelement (2) empfangen wird, wobei das Sende-Empfängerelement (2) als Reaktion auf das empfangene Sensorsignal (T1) ein Acknowledge-Signal (A2) sendet.

7. Verfahren gemäß dem Anspruch 6, wobei das Sende-Empfängerelement (2) im zweiten Modus (II) nach dem Empfang des Sensorsignals (T1) oder eines anderen Signals (S1) des Tastkopfs (1) ein weiteres Signal (02) sendet, welches ein Beenden des zweiten Modus (II) auslöst.

8. Verfahren gemäß dem Anspruch 6 oder 7, wobei die Signalübertragung auf nur einem Kanal durchgeführt wird.

9. Verfahren gemäß einem der Ansprüche 6 bis 8, wobei der Tastkopf (1) im zweiten Modus (II) in definierten Zeitabständen (Δtb) Signale (S1) sendet, wobei, nachdem eines dieser Signale (S) gesendet wurde, der Tastkopf (1) temporär empfangsbereit ist und die Empfangsbereitschaft vor dem Senden des nächsten dieser Signale (S1) deaktiviert wird.

10. Tastsystem gemäß einem der Ansprüche 6 bis 9, wobei vom Sende-Empfängerelement (2) das Signal (S2) während einer Zeitdauer (Δts) gesendet wird und der Tastkopf (1) während einer Zeitdauer (Δtr) empfangsbereit ist, wobei die Zeitdauer (Δtr), in welcher die Empfangsbereitschaft aktiviert ist, länger ist als die Zeitdauer (Δts), in welcher das Signal (S2) gesendet wird.

11. Verfahren gemäß einem der Ansprüche 6 bis 10, wobei beim Wechsel vom ersten Modus (I) in den zweiten Modus (II) und / oder beim Wechsel vom zweiten Modus (II) in den ersten Modus (I) das Tastsystem in einem dritten Modus (III) betrieben wird, wobei im dritten Modus (III)
der Tastkopf (1) und das Sende-Empfängerelement (2) empfangsbereit sind, aber
weder vom Tastkopf (1) noch vom Sende-Empfängerelement (2) Signale (A1, S1, S1', T1; A2, S2, 02) gesendet werden.

12. Verfahren gemäß einem der Ansprüche 6 bis 11, wobei beim Wechsel vom ersten Modus (I) in den zweiten Modus (II) das Tastsystem in einem dritten Modus (III) betrieben wird, wobei im dritten Modus (III)
der Tastkopf (1) und das Sende-Empfängerelement (2) empfangsbereit sind, aber
weder vom Tastkopf (1) noch vom Sende-Empfängerelement (2) Signale (A1, S1, S1', T1; A2, S2, 02) gesendet werden und
das Sensorelement (1.5) im dritten Modus (III) eingeschaltet wird.

## Claims

1. Sensing system comprising
- a sensing head (1) having a sensing pin (1.2) and a sensor element (1.5), as well as
- a transceiver element (2), wherein
the sensing head (1) and the transceiver element (2) are configured in such a manner that signals can be selectively transmitted between them in two modes (I, II) in such a manner that,
in the first mode (I), the transceiver element (2) can transmit a signal (S2) which can be received by the sensing head (1), wherein the sensing head (1) can transmit an acknowledge signal (A1) in response to the received signal (S2), wherein
in the first mode (I), the sensing head (1) cannot transmit any signals without being requested to do so, but rather only in response to a received signal (S2) from the transceiver element (2), wherein
before actual measurement operation, the sensing system can be operated in the first mode (I) in which the sensing head (1) is in a stand-by state, wherein the battery-operated sensing head (1) is not ready to receive in this state for comparatively long times and, in order to save power, can recurrently switch to being ready to receive only briefly during a period of time (Δtr), with the result that
in the first mode (I), the sensing head (1) is ready to receive during the period of time (Δtr) and the transceiver element (2) can transmit the signal (S2) during a further period of time (Δts), wherein the period of time (Δtr) for the readiness to receive is longer than the further period of time (Δts) in which the signal (S2) can be transmitted,
in the second mode (II), when the sensing pin (1.2) is touched, the sensor element (1.5) can generate a sensor signal (T1) which can be transmitted by the sensing head (1) and can be received by the transceiver element (2), wherein the transceiver element (2) can transmit an acknowledge signal (A2) in response to the received sensor signal (T1).

2. Sensing system according to Claim 1, wherein, in the second mode (II), after the sensor signal (T1) or another signal (S1) from the sensing head (1) has been received by the transceiver element (2), the transceiver element (2) can transmit a further signal (02) which can be used to trigger termination of the second mode (II).

3. Sensing system according to Claim 1 or 2, wherein the signals can be transmitted on only one channel.

4. Sensing system according to one of the preceding claims, wherein the readiness of the sensing head (1) to receive is temporarily deactivated in both modes (I, II) during a period of time (Δti) which extends at least partially into the time (Δtb) between the transmission of two signals (A1, S1, S1', T1) by the sensing head (1).

5. Sensing system according to one of the preceding claims, wherein, when changing from the first mode (I) to the second mode (II) and/or when changing from the second mode (II) to the first mode (T), the sensing system can be operated in a third mode (III), wherein, in the third mode (III),
the sensing head (1) and the transceiver element (2) are ready to receive but
neither the sensing head (1) nor the transceiver element (2) can transmit signals (A1, S1, S1', T1; A2 , S2, O2).

6. Method for operating a sensing system comprising a sensing head (1) having a sensing pin (1.2) and a sensor element (1.5), as well as a transceiver element (2), wherein the sensing head (1) and the transceiver element (2) are configured in such a manner that signals can be selectively transmitted between them in two modes (I, II) in such a manner that,
in the first mode (I), the transceiver element (2) transmits a signal (S2) which is received by the sensing head (1), and the sensing head (1) transmits an acknowledge signal (A1) in response to the received signal (S2), wherein, in the first mode (I), the sensing head (1) cannot transmit any signals without being requested to do so, but rather only in response to a received signal (S2) from the transceiver element (2), wherein
before actual measurement operation, the sensing system is operated in a first mode (I) in which the sensing head (1) is in a stand-by state, wherein the battery-operated sensing head (1) is not ready to receive for comparatively long times and, in order to save power, recurrently switches to being ready to receive only briefly during a period of time Δtr, wherein
in the first mode (I), the sensing head (1) is ready to receive during a period of time (Δtr) and the transceiver element (2) transmits the signal (S2) during a further period of time (Δts), wherein the period of time (Δtr) for the readiness to receive is longer than the further period of time (Δts) in which the signal (S2) is transmitted,
in the second mode (II), when the sensing pin (1.2) is touched, the sensor element (1.5) generates a sensor signal (T1) which is transmitted by the sensing head (1) and is received by the transceiver element (2), wherein the transceiver element (2) transmits an acknowledge signal (A2) in response to the received sensor signal (T1).

7. Method according to Claim 6, wherein, in the second mode (II), after the sensor signal (T1) or another signal (S1) from the sensing head (1) has been received, the transceiver element (2) transmits a further signal (02) which triggers termination of the second mode (II).

8. Method according to Claim 6 or 7, wherein the signals are transmitted on only one channel.

9. Method according to one of Claims 6 to 8, wherein the sensing head (1) transmits signals (S1) at defined intervals of time (Δtb) in the second mode (II), wherein, after one of these signals (S) has been transmitted, the sensing head (1) is temporarily ready to receive and the readiness to receive is deactivated before transmitting the next one of these signals (S1).

10. Sensing system according to one of Claims 6 to 9, wherein the transceiver element (2) transmits the signal (S2) during a period of time (Δts) and the sensing head (1) is ready to receive during a period of time (Δtr), wherein the period of time (Δtr) in which the readiness to receive is activated is longer than the period of time (Δts) in which the signal (S2) is transmitted.

11. Method according to one of Claims 6 to 10, wherein, when changing from the first mode (I) to the second mode (II) and/or when changing from the second mode (II) to the first mode (I), the sensing system is operated in a third mode (III), wherein, in the third mode (III),
the sensing head (1) and the transceiver element (2) are ready to receive but
neither the sensing head (1) nor the transceiver element (2) transmits signals (A1, S1, S1', T1; A2, S2, O2).

12. Method according to one of Claims 6 to 11, wherein, when changing from the first mode (I) to the second mode (II), the sensing system is operated in a third mode (III), wherein, in the third mode (III),
the sensing head (1) and the transceiver element (2) are ready to receive but
neither the sensing head (1) nor the transceiver element (2) transmits signals (A1, S1, S1', T1; A2, S2, O2), and
the sensor element (1.5) is switched on in the third mode (III).

## Revendications

1. Système de touche comprenant
une tête (1) de touche qui présente une tige (1.2) de touche et un élément de capteur (1.5) ainsi que
un élément émetteur-récepteur (2),
la tête (1) de touche et l'élément émetteur-récepteur (2) étant configurés de manière à pouvoir établir sélectivement entre eux une transmission de signaux en deux modes (I, II), de telle sorte que
dans le premier mode (I), un signal (S2) qui peut être reçu par la tête (1) de touche peut être émis par l'élément émetteur-récepteur (2), un signal (a) de confirmation de réception pouvant être envoyé par la tête (1) de touche en réponse à la réception du signal (S2),
dans le premier mode (I), aucun signal ne pouvant être envoyé spontanément par la tête (1), mais seulement en réaction à un signal (S2) reçu par l'élément émetteur-récepteur (2),
avant le fonctionnement de mesure proprement dit, le système de touche pouvant fonctionner dans le premier mode (I), dans lequel la tête (1) de touche se trouve dans un état de veille, la tête (1) de touche fonctionnant par batterie n'étant pas prête à la réception dans cet état pendant des temps comparativement longs, et, pour économiser du courant, pouvant commuter de manière récurrente seulement brièvement pendant une durée (Δtr) de manière prête à la réception, de telle sorte que
dans le premier mode (I), la tête (1) de la touche est prête à recevoir pendant la durée (Δtr) et le signal (S2) peut être envoyé par l'élément émetteur-récepteur (2) pendant une autre durée (Δts), la durée (Δtr) prête à la réception étant plus longue que l'autre durée (Δts) pendant laquelle le signal (S2) peut être émis,
dans le deuxième mode (II), lorsque la tige (1.2) de la touche est touchée, l'élément de capteur (1.5) peut former un signal de capteur (T1) qui peut être émis par la tête (1) de la touche et reçu par l'élément émetteur-récepteur (2), un signal (A2) de confirmation de réception pouvant être envoyé par l'élément émetteur-récepteur (2) en réponse à la réception du signal de capteur (T1).

2. Système de touche selon la revendication 1, dans lequel, dans le deuxième mode (II), après la réception du signal de capteur (T1) ou d'un autre signal (S1) de la tête (1) de la touche par l'élément émetteur-récepteur (2), un autre signal (02) par lequel la fin du deuxième mode (II) peut être déclenchée peut être envoyé par l'élément émetteur-récepteur (2).

3. Système de touche selon les revendications 1 ou 2, dans lequel la transmission des signaux ne peut être effectuée que sur un canal.

4. Système de touche selon l'une des revendications précédentes, dans lequel dans les deux modes (I, II), l'aptitude à la réception de la tête (1) de la touche peut être désactivée temporairement pendant une durée (Δti) qui s'étend au moins en partie pendant la durée (Δtb) qui s'écoule pendant l'émission de deux signaux (A1, S1, S1', T1) par la tête (1) de la touche.

5. Système de touche selon l'une des revendications précédentes, dans lequel lors du passage du premier mode (I) au deuxième mode (II) et/ou lors du passage du deuxième mode (II) au premier mode (I), le système de touche peut être utilisé dans un troisième mode (III), tandis que dans le troisième mode (III), la tête (1) de la touche et l'élément émetteur-récepteur (2) sont prêts à recevoir mais aucun signal (A1, S1, S1', T1; A2, S2, 02) ne peut être envoyé par la tête (1) de la touche ni par l'élément émetteur-récepteur (2).

6. Procédé de conduite d'un système de touche comprenant
une tête (1) de touche qui présente une tige (1.2) de touche et un élément de capteur (1.5) ainsi que
un élément émetteur-récepteur (2),
la tête (1) de touche et l'élément émetteur-récepteur (2) étant configurés de manière à pouvoir établir sélectivement entre eux une transmission de signaux en deux modes (I, II), de telle sorte que
dans le premier mode (I), un signal (S2) qui est reçu par la tête (1) de touche est émis par l'élément émetteur-récepteur (2), un signal (A1) de confirmation de réception étant envoyé par la tête (1) de touche en réponse à la réception du signal (S2),
dans le premier mode (I), la tête (1) de touche ne pouvant envoyeur aucun signal spontanément, mais seulement en réaction à un signal (S2) reçu par l'élément émetteur-récepteur (2),
avant le fonctionnement de mesure proprement dit, le système de touche fonctionnant dans un premier mode (I), dans lequel la tête (1) de touche se trouve dans un état de veille, la tête (1) de touche fonctionnant par batterie n'étant pas prête à la réception pendant des temps comparativement longs, et, pour économiser du courant, pouvant commuter de manière récurrente seulement brièvement pendant une durée Δtr de manière prête à la réception,
dans le premier mode (I), la tête (1) de touche étant prête à recevoir pendant une durée (Δtr) et le signal (S2) étant envoyé par l'élément émetteur-récepteur (2) pendant une deuxième durée (Ats), la durée (Atr) prête à la réception étant plus longue que l'autre durée (Δts) pendant laquelle le signal (S2) est émis,
dans le deuxième mode (II), lorsque la tige (1.2) de la touche est touchée, l'élément de capteur (1.5) forme un signal de capteur (T1) qui est émis par la tête (1) de la touche et est reçu par l'élément émetteur-récepteur (2), un signal (A2) de confirmation de réception étant envoyé par l'élément émetteur-récepteur (2) en réponse à la réception du signal de capteur (T1).

7. Procédé selon la revendication 6, dans lequel, dans le deuxième mode (II), après la réception du signal de capteur (T1) ou d'un autre signal (S1) de la tête (1) de la touche par l'élément émetteur-récepteur (2), un autre signal (02) qui déclenche la fin du deuxième mode (II) est envoyé par l'élément émetteur-récepteur (2).

8. Procédé selon les revendications 6 ou 7, dans lequel la transmission des signaux n'est effectuée que sur un cantal.

9. Procédé selon l'une des revendications 6 à 8, dans lequel dans le deuxième mode (II), la tête (1) de la touche émet des signaux (S1) à des intervalles de temps (Δtb) définis, la tête (1) de la touche étant temporairement prête à la réception après que l'un de ses signaux (S) a été émis et l'aptitude à la réception étant désactivée avant l'émission du suivant de ces signaux (S1).

10. Système de touche selon l'une des revendications 6 à 9, dans lequel le signal (S2) est émis par l'élément émetteur-récepteur (2) pendant une durée (Δts) et la tête (1) de la touche est prête à la réception, pendant une durée (Δtr), la durée (Δtr) pendant laquelle l'aptitude à la réception est activée étant plus longue que la durée (Δts) pendant laquelle le signal (S2) est émis.

11. Procédé selon l'une des revendications 6 à 10, dans lequel lors du passage du premier mode (I) au deuxième mode (II) et/ou lors du passage du deuxième mode (II) au premier mode (I), le système de touche est utilisé dans un troisième mode (III) lequel la tête (1) de la touche et l'élément émetteur-récepteur (2) sont prêts à recevoir mais aucun signal (A1, S1, S1', T1; A2, S2, 02) n'est envoyé par la tête (1) de la touche ni par l'élément émetteur-récepteur (2).

12. Procédé selon l'une des revendications 6 à 11, dans lequel lors du passage du premier mode (I) au deuxième mode (II), le système de touche est utilisé dans une troisième mode (III) lequel la tête (1) de la touche et l'élément émetteur-récepteur (2) sont prêts à recevoir mais aucun signal (A1, S1, S1', T1; A2, S2, 02) n'est envoyé par la tête (1) de la touche ni par l'élément émetteur-récepteur (2) et l'élément de capteur (1.5) est branché dans le troisième mode (III).
